# EUROPEAN PATENT SPECIFICATION

(11) **EP 1 971 792 B1**
(45) Date of publication and mention of the grant of the patent: **29.06.2011**
(21) Application number: 06842296.3
(22) Date of filing: 29.12.2006
(51) Int. Cl.: F16F 9/14

(54) **LINEAR DAMPER WITH INTEGRATED SWITCH**
LINEARDÄMPFER MIT INTEGRIERTEM SCHALTER
DISPOSITIF D'AMORTISSEMENT LINEAIRE A COMMUTATEUR INTEGRE

(30) Priority: 07.01.2006 DE 102006000950
(43) Date of publication of application: 24.09.2008
(73) Proprietor: ITW Automotive Products GmbH & Co. KG, 58642 Iserlohn (DE)
(72) Inventor: HEHN, Rainer, 97243 Bieberehren (DE); KEMMER, Richard, 97243 Bieberehren (DE); SPÖRLEIN, Stephan, 96114 Hirschaid (DE)
(74) Representative: Hauck Patent- und Rechtsanwälte
(86) International application number: PCT/IB2006/003792
(87) International publication number: WO 2007/080448

(56) References cited:
- GB-A- 2 267 326
- US-A- 4 667 940
- US-A- 5 003 136

## Description

### TECHNICAL FIELD

The disclosure relates to a linear damper with an integrated switch.

### BACKGROUND

For instance as regards cars, it is known to damp various vehicle parts using rotary or linear dampers. Illustratively a trunk lid is damped by a gas spring damper. It is also known to use linear dampers for smaller parts such as glove compartment covers and the like.

The European patent document EP0 043 308 A2 discloses the combination of a linear damper with an electric switch. When the damper moves into a limit position, the switch will close and turn on a light source illustratively illuminating the damper's vicinity. US patent 4,667,940 also discloses integrating an electric switch into a linear damper. In this design the switch contact terminals are configured inside the damper cylinder.

A linear damper according to the preamble of claim 1 is known from document DE-A- 199 28 194.

### SUMMARY

There is a need to create a linear damper with an integrated switch, manufacturing tolerances being compensated and therefore such tolerances cannot affect the damping properties.

The linear damper uses a rotary damper cooperating with a gear rack. Accordingly the term "linear damper" herein must be construed as the damping applying to a substantially linear displacement. A switch is housed in a switch housing and comprises two fixed and one displaceable contact terminals. The switch housing preferably is mounted on the particular stationary part of the linear damper. It is understood that in such a design, either the rotary damper or the gear rack may be stationary, the other component then being displaced together with the part to be damped. A control device is configured at the displaceable or stationary part and drives the contact terminal when the displaceable part approaches its limit position, in order to electrically disconnect the two fixed contact terminals.

The above design offers substantial advantages. The switch is integral with the linear damper and illustratively may be used to illuminate a glove compartment. The switch may be designed to open or to close. The damping properties are free from negative influences.

In one embodiment mode of the present invention, the displaceable contact terminal is approximately U-shaped, one of the legs of this U being affixed in the switch housing and the other leg cooperating with the fixed contact terminals.

In a further embodiment mode of the present invention, the switch housing may be joined in geometrically locking (positive) manner to the fixed part and/or by means of a detent element. Alternatively the switch and damper housings may be integral.

In a further embodiment mode of the present invention, the damper housing and/or the gear rack may be designed in a manner to allow either or both being rotated in position by 180°. This feature allows matching the particular item to be damped to the damping direction. No special damper matching is required in the present invention.

### BRIEF DESCRIPTION OF THE DRAWINGS

An illustrative embodiment of the present invention is elucidated below in relation to the appended drawings.
**Fig. 1** is a schematic sideview of a linear damper of the invention, the switch being open, and
**Fig. 2** is similar to Fig. 1, but the switch is closed.

### DETAILED DESCRIPTION

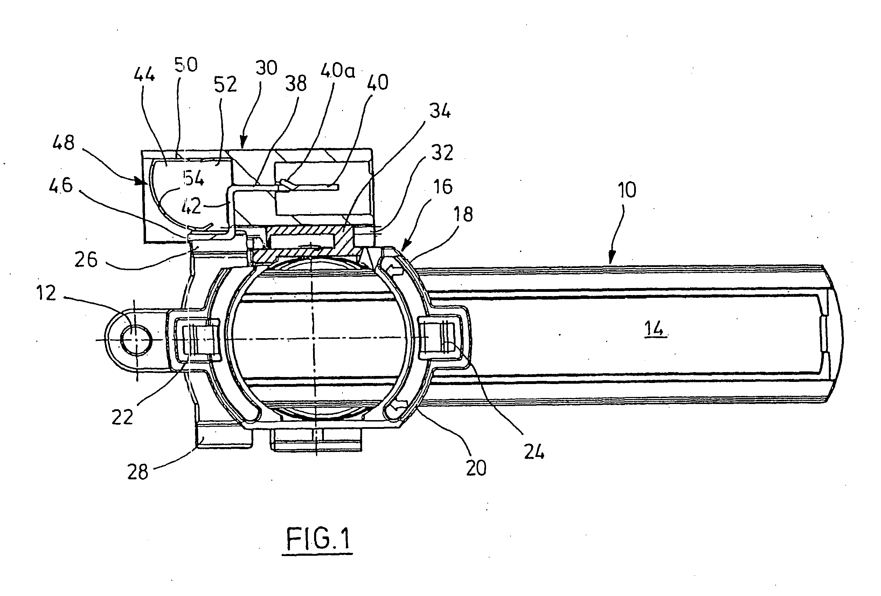

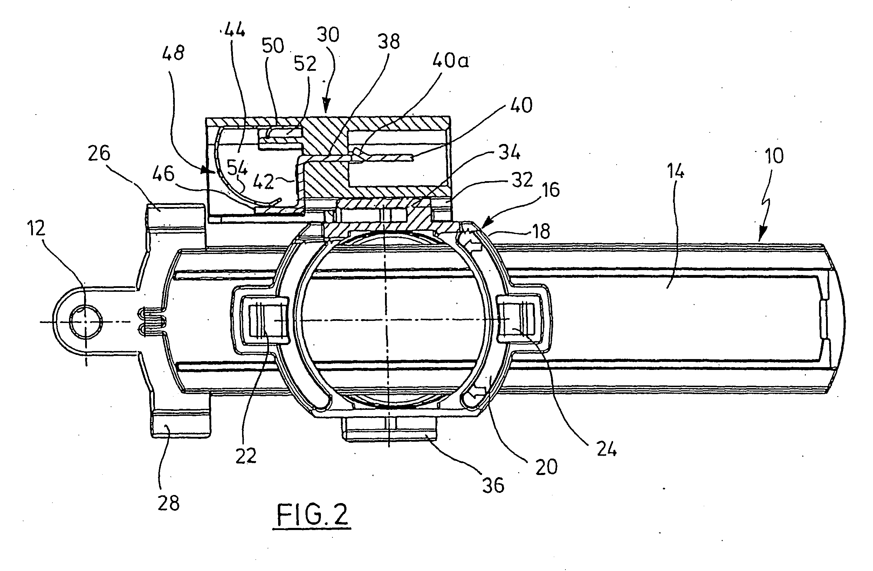

The damping system shown in Figs. 1 and 2 comprises a gear rack 10 fitted with an aperture 12 at one end to allow linking it to an omitted item. Figs. 1 and 2 only show the back side of the gear rack 10, not the front side fitted with the toothing. Said back side is an elongated planar surface 14. Also a conventional rotary damper 16 is indicated and is received in a housing 18. Said rotary damper is conventional and contains a rotor rotating for instance in a viscous liquid and having a shaft connected to a pinion meshing with the gear rack 10 (also omitted). This is how the said gear rack motion will be damped.

Fig. 1 only shows one guide element 20 of the rotary damper 16, the gear rack 10 being guided linearly. As shown, the guide comprises two substantially arcuate sections configured mutually a distance from each other and from the damper housing 18 and subtending a guide gap for the gear rack 10. Tabs 22, 24 are integrated into said sections at two mutually opposite sides and rest against the planar surface 14 in order to implement smooth guidance.

Both at one end and at mutually opposite sides, the gear rack 10 is fitted with a respective drive segment 26 and 28.

A switch housing 30 is affixed to the damper housing 18. Said switch housing is fitted with a cross-sectionally T-shaped groove 32 cooperating with a T-shaped spring 34 of the damper housing 18. Again, as shown, another cross-sectionally T-shaped spring is configured at the opposite side of said damper housing 18. The switch housing may be configured equally well on either side of the damper housing 18. They are configured in a manner that detent action takes place between the spring 34 or 36 on one hand and the groove 32 on the other; this detent operation however is not shown in detail.

Two fixed contact terminals, of which only one, namely 38, is shown, are configured inside the switch housing 30. The fixed contact terminals 38 are mounted parallel to each other and more or less assume an S-shape. They are made of a suitable metal. A first leg 40 runs through a corresponding slot in the switch housing 30 that is integrally made of plastic, a tongue-like bend 40a precluding the leg 38 from being pulled out. Another leg 42 rests against a wall of a cavity 44 in the switch housing 30 and a third leg 46 enters the cavity 44 which also houses a displaceable contact terminal 48. For that purpose the approximately U-shaped displaceable contact terminal 38 is inserted by a first leg 50 into a clearance 52 of the switch housing 30, a bend precluding the legs 42 from being easily pulled out. Relative to the leg 50, a second leg 54 can be bent toward or away from it.

When the gear rack 10 is in a position shown in Fig. 2, the leg 54 of the displaceable contact terminal 48 on account of its intrinsic spring bias will rest against the legs 46 of the stationary contact terminals 38. As already mentioned above, said latter contact terminals are configured to be parallel to and apart from each other. As a result the stationary contact terminals 38 have been electrically connected. If on the other hand the gear rack 10 moves into a position as shown in Fig. 1, the displaceable leg 54 shall be lifted by its associated drive segment 26 and thereby shall no longer be electrically contacting the segment 46 of the stationary contact terminals 38. The switch thereby shall be open.

When the switch housing 30 is configured on the opposite side of the damper housing 18, the displaceable contact terminal 48 will be driven in the same manner by the drive segment 28.

## Claims

1. Linear damper fitted with an integrated switch having the following features:
a rotary damper (16) comprising a housing (18) and a pinion,
a gear rack (10) cooperating both with said pinion and with a linear guide (20) of the damper housing (18), either the rotary damper (16) or the gear rack (10) being connected to a displaceable damper part, whereas the other damper part is stationary, **characterised by**
a switch comprising a switch housing (30) in which are configured two stationary contact terminals (38) and one displaceable contact terminal (48), said switch housing (30) being mounted at the linear damper's stationary or displaceable part, and
a control device (26, 28) at the displaceable or stationary damper part to drive the displaceable contact terminal (48) as it approaches a limit position, in order to electrically disconnect the two stationary contact terminals (38).

2. Linear damper as claimed in claim 1, **characterized in that** the displaceable contact terminal (48) is approximately U-shaped, one leg (50) being affixed in the switch housing (30) and the other leg (54) cooperating with the stationary contact terminals (38).

3. Linear damper as claimed in either of claims 1 and 2, **characterized in that** the switch housing and the damper housings are integral.

4. Linear damper as claimed in either of claims 1 and 2, **characterized in that** the switch housing (30) is assembled by means of a geometrically locking (positive) connection or is mounted by means of a detent connection.

5. Linear damper as claimed in claim 4, **characterized in that** the switch housing (30) is fitted with a groove (32) or with a specifically cross-sectionally contoured spring and the damper housing (18) comprises a specifically cross-sectionally contoured spring or a specifically cross-sectionally contoured groove (32) and **in that** said specifically cross-sectionally contoured groove and spring are complementary.

6. Linear damper as claimed in claim 5, **characterized in that** the damper housing (18) and/or the gear rack (10) are designed in a manner allowing rotating them by 180°.

7. Linear damper as claimed in one of claims 1 through 6, **characterized in that** a control means or contract terminals are fitted on both sides of a longitudinal axis of the linear damper and/or on both sides of the damper housing (18).

8. Linear damper as claimed in one of claims 2 through 7, **characterized in that** the connecting web of the U-shaped displaceable contact terminal (48) is fitted with an aperture or clearance and **in that** a deviating element is constituted near said aperture or clearance, said element acting as a rest for the gear rack's control means when being displaced through said aperture or clearance between the legs of the contact terminal (48).

9. Linear damper as claimed in one of claims 1 through 8, **characterized in that** the guide element (20) comprises two mutually spaced elastic parts (22, 24) resting against an elongated, planar surface (14) of the gear rack (10).

## Patentansprüche

1. Lineardämpfer mit integriertem Schalter mit folgenden Merkmalen:
ein Rotationsdämpfer (16) mit einem Gehäuse (18) und einem Ritzel,
eine mit dem Ritzel zusammenwirkende Zahnstange (10), die mit einer linearen Führung (20) des Dämpfergehäuses (18) zusammenwirkt, wobei entweder der Rotationsdämpfer (16) oder die Zahnstange (10) mit einem beweglichen Teil verbunden ist, während das andere Teil stationär ist, **gekennzeichnet durch** einen Schalter mit einem Schaltergehäuse (30), in dem zwei feststehende Kontaktelemente (38) und ein bewegliches Kontaktelement (48) angeordnet sind, wobei das Schaltergehäuse (30) am feststehenden oder beweglichen Teil des Lineardämpfers angebracht ist und
einen Steuerabschnitt (26, 28) am beweglichen oder feststehenden Teil des Lineardämpfers, der das bewegliche Kontaktelement (48) betätigt, wenn der bewegliche Teil sich einer Endlage nähert, um die zwei feststehenden Kontaktelemente (38) elektrisch abzutrennen.

2. Lineardämpfer nach Anspruch 1, **dadurch gekennzeichnet, dass** das bewegliche Kontaktelement (48) annähernd U-Form hat, wobei der eine Schenkel (50) im Schaltergehäuse (30) festgelegt ist und der andere Schenkel (54) mit den feststehenden Kontaktelementen (38) zusammenwirkt.

3. Lineardämpfer nach Anspruch 1 oder 2, **dadurch gekennzeichnet, dass** das Schaltergehäuse und Dämpfergehäuse einteilig geformt sind.

4. Lineardämpfer nach Anspruch 1 oder 2, **dadurch gekennzeichnet, dass** das Schaltergehäuse (30) über eine Formschlussverbindung aufgeschoben oder mit Hilfe einer Rastverbindung angebracht ist.

5. Lineardämpfer nach Anspruch 4, **dadurch gekennzeichnet, dass** das Schaltergehäuse (30) eine Nut (32) oder eine Profilfeder aufweist und das Dämpfergehäuse (18) eine Profilfeder oder eine Profilnut (32) aufweist und Profilnut und Profilfeder komplementär geformt sind.

6. Lineardämpfer nach Anspruch 5, **dadurch gekennzeichnet, dass** Dämpfergehäuse (18) und/oder Zahnstange (10) so ausgebildet ist, dass es/sie in um 180° gedrehten Positionen angeordnet werden können.

7. Lineardämpfer nach einem der Ansprüche 1 bis 6, **dadurch gekennzeichnet, dass** auf beiden Seiten einer Längsachse des Lineardämpfers und/oder auf beiden Seiten des Dämpfergehäuses (18) ein Steuerabschnitt oder Kontaktelemente vorgesehen ist/sind.

8. Lineardämpfer nach einem der Ansprüche 2 bis 7, **dadurch gekennzeichnet, dass** der Verbindungssteg des U-förmigen beweglichen Kontaktelements (48) eine Öffnung oder Ausnehmung aufweist und nahe der Öffnung oder Ausnehmung ein Ablenkabschnitt angeformt ist derart, dass gegen diesen der Steuerabschnitt der Zahnstange zur Anlage kommt, wenn er durch die Öffnung oder Ausnehmung hindurch zwischen die Schenkel des Kontaktelements (48) bewegt wird.

9. Lineardämpfer nach einem der Ansprüche 1 bis 8, **dadurch gekennzeichnet, dass** die Führung (20) zwei beabstandete federnde Abschnitte (22, 24) aufweist, die gegen eine längliche plane Fläche (14) der Zahnstange (10) anliegen.

## Revendications

1. Amortisseur linéaire muni d'un commutateur intégré ayant les caractéristiques suivantes :
un amortisseur rotatif (16) comprenant un boîtier (18) et un pignon,
une crémaillère (10) coopérant à la fois avec ledit pignon et avec un guide linéaire (20) du boîtier d'amortisseur (18), l'amortisseur rotatif (16) ou la crémaillère (10) étant connecté à une partie d'amortisseur
déplaçable, tandis que l'autre partie d'amortisseur est stationnaire, **caractérisé par**
un commutateur comprenant un boîtier de commutateur (30) dans lequel sont configurées deux bornes de contact stationnaires (38) et
une borne de contact déplaçable (48), ledit boîtier de commutateur (30) étant monté sur la partie stationnaire ou déplaçable de l'amortisseur linéaire, et
un dispositif de commande (26, 28) sur la partie d'amortisseur déplaçable ou stationnaire pour entraîner la borne de contact déplaçable (48) à mesure qu'elle s'approche d'une position limite, afin de déconnecter électriquement les deux bornes de contact stationnaires (38).

2. Amortisseur linéaire selon la revendication 1, **caractérisé en ce que** la borne de contact déplaçable (48) est approximativement en forme de U, une patte (50) étant fixée dans le boîtier de commutateur (30) et l'autre patte (54) coopérant avec les bornes de contact stationnaires (38).

3. Amortisseur linéaire selon l'une quelconque des revendications 1 et 2, **caractérisé en ce que** le boîtier de commutateur et les boîtiers d'amortisseur sont intégraux.

4. Amortisseur linéaire selon l'une quelconque des revendications 1 et 2, **caractérisé en ce que** le boîtier de commutateur (30) est assemblé au moyen d'une connexion de verrouillage par engagement par correspondance géométrique (positive) ou est monté au moyen d'une connexion à goujon.

5. Amortisseur linéaire selon la revendication 4, **caractérisé en ce que** le boîtier de commutateur (30) est muni d'une gorge (32) ou d'un ressort de contour spécifique en section transversale, et le boîtier d'amortisseur (18) comprend un ressort de contour spécifique en section transversale ou une gorge (32) de contour spécifique en section transversale et **en ce que** ladite gorge ou ledit ressort de contour spécifique en section transversale sont complémentaires.

6. Amortisseur linéaire selon la revendication 5, **caractérisé en ce que** le boîtier d'amortisseur (18) et/ou la crémaillère (10) sont conçus de manière à permettre leur rotation sur 180°.

7. Amortisseur linéaire selon l'une quelconque des revendications 1 à 6, **caractérisé en ce qu'**un moyen de commande ou des bornes de contact sont montés sur les deux côtés d'un axe longitudinal de l'amortisseur linéaire et/ou sur les deux côtés du boîtier d'amortisseur (18).

8. Amortisseur linéaire selon l'une quelconque des revendications 2 à 7, **caractérisé en ce que** la nervure de connexion de la borne de contact déplaçable en forme de U (48) est munie d'une ouverture ou d'un dégagement et **en ce qu'**un élément déflecteur est réalisé près de ladite ouverture ou dudit dégagement, ledit élément agissant en tant que support pour le moyen de commande de la crémaillère lorsqu'il est déplacé à travers ladite ouverture ou ledit dégagement entre les pattes de la borne de contact (48).

9. Amortisseur linéaire selon l'une quelconque des revendications 1 à 8, **caractérisé en ce que** l'élément de guidage (20) comprend deux parties élastiques espacées mutuellement (22, 24) reposant sur une surface plane allongée (14) de la crémaillère (10).
